# EUROPEAN PATENT APPLICATION

(11) **EP 4 669 015 A1**
(43) Date of publication of application: **24.12.2025**
(21) Application number: 23921708.6
(22) Date of filing: 14.02.2023
(51) Int. Cl.: H04W 76/12

(54) **DATA TRANSMISSION METHOD AND APPARATUS, AND STORAGE MEDIUM**

(71) Applicant: Beijing Xiaomi Mobile Software Co., Ltd., Beijing 100085 (CN)
(72) Inventor: LI, Yanhua, Beijing 100085 (CN); WU, Yumin, Beijing 100085 (CN)
(74) Representative: Stöckeler, Ferdinand
(86) International application number: PCT/CN2023/076006
(87) International publication number: WO 2024/168540

(57) **Abstract**

Provided in the embodiments of the present disclosure are a data transmission method and apparatus, and a storage medium. The data transmission method is executed by a first network device, and comprises: starting downlink data transmission of a UE when a predetermined condition is satisfied, wherein the predetermined condition indicates that uplink data has been detected.

## Description

### TECHNICAL FIELD

The disclosure relates to, but is not limited to, the field of wireless communication technology, in particular to a data transmission method, a data transmission apparatus, and a related storage medium.

### BACKGROUND

In related arts, when downlink (DL) data arrives, a core network will evaluate a reachability of a user equipment (UE). For example, for a UE configured with extended discontinuous reception (eDRX), the core network determines whether the UE is reachable by evaluating based on an eDRX parameter. However, after the UE initiates an uplink (UL) data transmission, a DL data transmission often cannot be performed because the core network determines that the UE is unreachable at this time, and thus the UE cannot receive the required DL data.

### SUMMARY

The embodiments of the disclosure provide a data transmission method, a data transmission apparatus, and a related storage medium.

According to a first aspect of embodiments of the disclosure, a data transmission method is provided. The method is performed by a first network device, and includes:
starting a DL data transmission to a UE when a preset condition is met, in which the preset condition indicates that UL data is detected.

According to a second aspect of embodiments of the disclosure, a data transmission method is provided. The method is performed by a second network device, and includes:
starting a DL data transmission to a UE when a preset condition is met, in which the preset condition indicates that UL data is detected.

According to a third aspect of embodiments of the disclosure, a data transmission system is provided. The system includes: a first network device and a second network device.

The first network device is configured to perform one or more of the above technical solutions.

The second network device is configured to perform one or more of the above technical solutions.

According to a fourth aspect of embodiments of the disclosure, a data transmission apparatus is provided. The apparatus includes:
a first processing module, configured to start a DL data transmission to a UE when a preset condition is met, in which the preset condition indicates that UL data is detected.

According to a fifth aspect of embodiments of the disclosure, a data transmission apparatus is provided. The apparatus includes:
a second processing module, configured to start a DL data transmission to a UE when a preset condition is met, in which the preset condition indicates that UL data is detected.

According to a sixth aspect of embodiments of the disclosure, a communication device is provided. The communication device includes: a processor, a transceiver, a memory and an executable program stored in the memory and executable by the processor. The processor, when executing the executable program, implements the data transmission method as described in any of the previous embodiments.

According to a seventh aspect of embodiments of the disclosure, a computer storage medium is provided. The computer storage medium stores an executable program, and when executed by a processor, causes the processor to implement the data transmission method as described in any of the previous embodiments.

The embodiments of the disclosure provide a data transmission method. The method is performed by a first network device, and includes: starting a DL data transmission to a UE when a preset condition is met, in which the preset condition indicates that UL data is detected. In this way, after the UL data is detected, the DL data transmission to the UE can be started, thereby reducing the probability of DL data transmission being prevented due to the network device determining the UE as unreachable. This improves the stability and efficiency of a data transmission of a data interaction between the UE and the network device while reducing a failure rate of the DL data transmission.

It is understandable that the foregoing general description and the following detailed descriptions are exemplary and explanatory only and do not limit the embodiments of the disclosure.

### BRIEF DESCRIPTION OF THE DRAWINGS

The accompanying drawings, which are incorporated in and constitute a part of this specification, illustrate the embodiments consistent with the disclosure and, together with the specification, serve to explain the principles of the embodiments of the disclosure.
FIG. 1 is a schematic structural diagram of a wireless communication system illustrated according to an embodiment.
FIG. 2 is a flowchart of a data transmission method illustrated according to an embodiment.
FIG. 3 is a flowchart of a data transmission method illustrated according to an embodiment.
FIG. 4 is a flowchart of a data transmission method illustrated according to an embodiment.
FIG. 5 is a flowchart of a data transmission method illustrated according to an embodiment.
FIG. 6 is a flowchart of a data transmission method illustrated according to an embodiment.
FIG. 7 is a flowchart of a data transmission method illustrated according to an embodiment.
FIG. 8 is a flowchart of a data transmission method illustrated according to an embodiment.
FIG. 9 is a flowchart of a data transmission method illustrated according to an embodiment.
FIG. 10 is a flowchart of a data transmission method illustrated according to an embodiment.
FIG. 11 is a schematic structural diagram of a data transmission apparatus illustrated according to an embodiment.
FIG. 12 is a schematic structural diagram of a data transmission apparatus illustrated according to an embodiment.
FIG. 13 is a schematic structural diagram of a terminal illustrated according to an embodiment.
FIG. 14 is a schematic structural diagram of a communication device illustrated according to an embodiment.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with the embodiments of the disclosure. Instead, they are merely examples of apparatuses and methods consistent with aspects related to the embodiments of the disclosure.

The terms used in the disclosure are only for the purpose of describing specific embodiments, and are not intended to limit the embodiments of the disclosure. The singular forms of "a" and "the" used in the disclosure are also intended to include plural forms, unless the context clearly indicates other meanings. It is understandable that the term "and/or" as used herein refers to and includes any or all possible combinations of one or more associated listed items.

It is understandable that although the terms "first", "second", and "third" may be used in the embodiments of the disclosure to describe various types of information, the information should not be limited to these terms. These terms are only used to distinguish the same type of information from each other. For example, without departing from the scope of the embodiments of the disclosure, the first information may also be referred to as the second information, and similarly, the second information may also be referred to as the first information. Depending on the context, the term "if" as used herein may be interpreted as "when", "while", or "in response to determining".

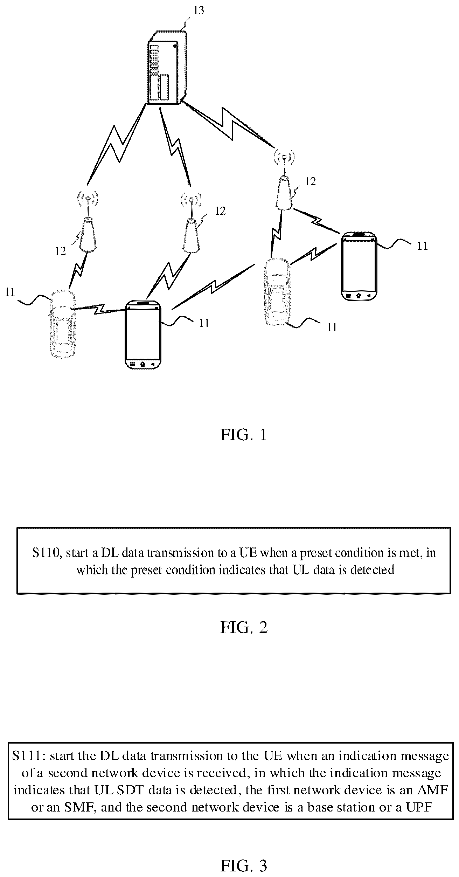

FIG. 1 is a schematic structural diagram of a wireless communication system provided by an embodiment of the disclosure. As illustrated in FIG. 1, the wireless communication system is a communication system based on cellular mobile communication technology. The wireless communication system includes: several terminals 11 and several access devices 12.

The terminal 11 may be a device that provides voice and/or data connectivity to a user. The terminal 11 may communicate with one or more core networks via a radio access network (RAN). The terminal 11 may be an Internet of Things (IoT) terminal, such as a sensor device, a cell phone (or "cellular" phone), and a computer with the IoT UE, for example, a stationary, portable, pocket-sized, handheld, computer-built or vehicle-mounted device, such as, a station (STA), a subscriber unit, a subscriber station, a mobile station, a mobile, a remote station, an access point, a remote terminal, an access terminal, a user device, a user agent, a UE, or a user terminal. Or, the terminal 11 may also be an unmanned aerial vehicle device. Or, the terminal 11 may be an in-vehicle device, for example, a driving computer having wireless communication function or a wireless communication device external to the driving computer. Or, the terminal 11 may also be a roadside device, for example, a street light, a signal light, or other roadside devices having the wireless communication function.

The access device 12 may be a network node device in the wireless communication system. The wireless communication system may be a 4th generation (4G) mobile communication system, also known as a long term evolution (LTE) system. Or, the wireless communication system may be a 5th generation (5G) system, also known as new radio (NR) system or 5G NR system. Or, the wireless communication system may be any next generation system of the 5G system. The access network in the 5G system may be called a new generation-RAN (NG-RAN) or a machine type communication (MTC) system.

The access device 12 may be an evolved access device (eNB) employed in the 4G system. Or, the access device 12 may be an access device (gNB) with a centralized distributed architecture employed in the 5G system. In a case that the access device 12 adopts the centralized-distributed architecture, the access device 12 usually includes a central unit (CU) and at least two distributed units (DUs). The CU is configured with protocol stacks of a packet data convergence protocol (PDCP) layer, a radio link control (RLC) layer, and a media access control (MAC) layer. The DU is configured with a protocol stack of a physical (PHY) layer, and the specific implementation of the access device 12 is not limited in the embodiments of the disclosure.

A wireless connection may be established between the access device 12 and the terminal 11 via a wireless radio interface. In different implementations, the wireless radio interface is a wireless radio interface based on the 4G standard. Or, the wireless radio interface is a wireless radio interface based on the 5G standard, such as a NR. Or, the wireless radio interface may be a wireless radio interface based on the standard of the next generation of 5G.

In an embodiment of the disclosure, the above wireless communication system may also include a network management device 13. A plurality of access devices 12 are connected to the network management device 13, respectively. The network management device 13 may be a core network device in the wireless communication system. For example, the network management device 13 is a mobility management entity (MME) in an evolved packet core (EPC). Or, the network management device may be any other core network device, such as a serving gateway (SGW), a public data network gateway (PGW), a policy and charging rules function (PCRF), or a home subscriber server (HSS), etc. The implementation form of the network management device 13 is not limited in the embodiments of the disclosure.

In an embodiment of the disclosure, the terminal 11 may be a UE in the disclosure, the access device 12 may be a second network device in the disclosure, such as a base station, and the network management device 13 may be a first network device and/or the second network device in the disclosure, such as a core network device.

FIG. 2 illustrates a data transmission method. The method is performed by a first network device and includes the following step S110. In block S110, a DL data transmission to a UE is started when a preset condition is met, in which the preset condition indicates that UL data is detected. The first network device may be a core network device, such as an access and mobility management function (AMF), a session management function (SMF), or a user plane function (UPF).

In an embodiment, the UE may include, but is not limited to, a mobile phone, a wearable device, a vehicle-mounted terminal, a road side unit (RSU), a smart home terminal, an industrial sensing equipment and/or a medical device.

In an embodiment, the preset condition may indicate that the first network device and/or a second network device detects the UL data. The first network device detects the UL data, indicating that first network device has received the UL data, or that the first network device detects that the second network device has received the UL data. The second network device may be a base station or the like, or in a case that the first network device is a core network device other than a UPF, the second network device may be a UPF.

In an embodiment, the UE is in a radio resource control (RRC) inactive state, or it may be in a connected state or an idle state.

In an embodiment, the first network device may configure or start a preset function. The preset function may include, but is not limited to, core network-based mobile terminated communication and/or high latency communication functions.

In related arts, for a first network device configured with the core network based mobile terminated communication and/or high latency communication functions, if UL data initiated by the UE is received, the first network device will evaluate the reachability of the UE based on parameters such as an eDRX cycle value. If it is determined that the UE is unreachable, DL data transmission will be terminated or delayed. For example, a waiting duration will be evaluated, and the DL data buffering will be initiated, that is, the UE cannot promptly receive the required DL data.

In an embodiment, the UE configures an inactive eDRX cycle value to be greater than a preset threshold, and the UE also configures small data transmission (SDT). The DL data to the UE and/or the UL data detected may be SDT data. At this time, duo to the larger eDRX cycle value, the first network device is more likely to determine that the UE is in an unreachable state, consequently making SDT DL data transmission more prone to being blocked. Therefore, initiating DL data transmission upon meeting the trigger condition of detecting uplink data can mitigate the impact of eDRX on SDT data transmission..

In an embodiment, the preset threshold may be a fixed value such as 10.24 seconds (10.24s) or 20.48s, or a threshold determined according to an operating condition of the UE and/or the network device. The network device may include the first network device and/or the second network device, and the operating condition may include a current operating condition and/or a historical operating condition.

In an embodiment, the current operating condition may include at least one of a current channel occupancy, a current resource occupancy or a current power consumption. The historical operating condition may include at least one of a channel occupancy, a resource occupancy and a power consumption over a period of time, for example, at least one of an average channel occupancy, an average resource occupancy and an average power consumption over the period of time.

In an embodiment, the UE configures an inactive eDRX cycle value to be greater than a preset threshold or configures SDT. That is, the eDRX cycle value greater than the preset threshold and the SDT are not configured simultaneously, which can reduce an impact of a larger eDRX cycle value on SDT.

In an embodiment, a protocol specifies that the UE configures an inactive eDRX cycle value to be greater than a preset threshold, or the UE configures SDT. That is, the protocol stipulates that the eDRX cycle value greater than the preset threshold and the SDT are not configured simultaneously.

In an embodiment, a protocol specifies that the network may configure the UE with an inactive eDRX cycle value greater than a preset threshold, while the UE simultaneously configures SDT. That is, the eDRX cycle value greater than the preset threshold and the SDT may be configured simultaneously.

In an embodiment, the preset condition may include that an indication message from the second network device is received, and the indication message indicates that the second network device has detected UL transmission data. For example, S110 may include: starting the DL data transmission to the UE when the indication message from the second network device is received, in which the indication message is configured to indicate that UL SDT data is detected. The second network device may send the indication message to the first network device after receiving the UL SDT data, and then the first network device starts the DL data transmission to the UE. The first network device may be an AMF or an SMF, and the second network device may be a base station or a UPF.

In an embodiment, in a case that the second network device is a base station, the base station may send an indication message to the AMF or the SMF. in a case that the second network device is a UPF, the UPF may send an indication message to the AMF and/or the SMF.

In an embodiment, in a case that the first network device is an AMF, starting the DL data transmission to the UE includes: notifying a core network element other than the AMF to start the DL data transmission to the UE. Starting the DL data transmission to the UE includes: sending DL data to a base station, so that the base station can send the DL data to the UE.

In an embodiment, after receiving the UL SDT data, the base station sends the indication message to the first network device, such as an AMF or an SMF, and the first network device sends DL data to the base station after receiving the indication message, or notifies the other core network elements to start DL data transmission to the UE.

In an embodiment, after receiving the UL SDT data, the base station sends the UL SDT data to a UPF. After receiving the UL SDT data, the UPF sends the indication message to the first network device such as an AMF and/or an SMF. After receiving the indication message, the first network device, such as the AMF, notifies a core network element other than the first network device to perform DL data transmission to the UE, or the first network device sends DL data to the base station.

In an embodiment, after receiving the UL SDT data, the base station sends an indication message to a UPF. After receiving the indication message, the UPF sends the indication message to the first network device, such as an AMF and/or an SMF. After receiving the indication message, the first network device, such as an AMF, notifies a core network element other than the first network device to perform DL data transmission to the UE, or the first network device sends DL data to the base station.

In an embodiment, the first network device notifies a core network element other than the AMF to start DL data transmission to the UE. That is, when it is determined that the UE is reachable, the first network device notifies the core network element other than the AMF to start DL data transmission to the UE.

In an embodiment, the first network device notifies a core network element other than the AMF to start DL data transmission to the UE. That is, when it is determined that the UE is reachable, the first network device notifies the core network element other than the AMF to start DL data transmission to the UE, and the first network device simultaneously informs the base station to enter an RRC connected state.

In an embodiment, the first network device determines that the UE is in an unreachable state prior receiving the indication message, it may re-determine the UE is now in a reachable state after receiving the indication message.

In an embodiment, in a case that the first network device is an AMF, the method may further include: if it is still determined that the UE is unreachable after the indication message is received, notifying the base station to maintain in the inactive state. Maintaining in the inactive state may refer to that the base station and the UE both maintain in an RRC inactive state.

In an embodiment, DL data may be DL SDT data.

In an embodiment, the base station notifies the core network device that it can receive the indication message from the base station via a control plane, i.e., AMF, etc. In this case, the first network device is an AMF or an SMF, and the second network device is a base station. Or, the base station notifies the core network device via a user plane, that is, after a UPF receives the indication message from the base station, the UPF sends the indication message to other core network devices such as an AMF and/or an SMF. In this case, the first network device is an AMF and/or an SMF, and the second network device is a UPF.

In an embodiment, the preset condition is that UL SDT data is received or an indication message from the second network device is received. S110 may include: when UL SDT data is received or when an indication message of a second network device is received, starting DL data transmission to the UE, in which the indication message indicates that UL SDT data is detected.

The first network device is a UPF, and the second network device is a base station. Starting the DL data transmission to the UE may include: sending DL data to the second network device, or sending an indication message to other core network devices such as an AMF and/or an SMF to indicate the core network devices to start DL data transmission to UE.

In an embodiment, the UL SDT data is received may be the UL SDT data sent by the base station is received. The indication message from the second network device is received may be the indication message sent by the base station is received. Starting the DL data transmission to the UE when the indication message of the second network device is received includes: sending the DL data to the second network device when the indication message of the second network device is received, or sending an indication message to other core network devices such as an AMF and/or an SMF to indicate the core network devices to start the DL data transmission to the UE.

In an embodiment, after receiving UL SDT data, the base station may send the UL SDT data to a UPF, and the UPF sends the DL data to the base station, or the UPF sends an indication message to the first network device such as an AMF and/or an SMF.

In an embodiment, after receiving UL SDT data, the base station may send an indication message to the UPF, and the UPF starts a DL data transmission to the UE after receiving the indication message.

In an embodiment, in a case that the first network device is a UPF, starting the DL data transmission to the UE includes: sending DL data to a second network device. At this time, the second network device is a base station.

In an embodiment, the indication message includes: a control plane signaling or a user plane signaling.

In an embodiment, the indication message is a control plane signaling, and the control plane signaling indicates that the uplink SDT data has arrived or a SDT is in progress. For example, the indication message may carry a cause value, such as "UL SDT data arrives" or "SDT in progress". The UL SDT data arrives, it may refer to that the UL SDT data arrives at the second network device, such as a base station.

In an embodiment, the indication message is a control plane signaling, and the control plane signaling carries auxiliary information indicating that the UL SDT data is detected. The auxiliary information may include at least one of the following: a data size of the UL SDT data detected; an identity (ID) of a protocol data unit (PDU) session supporting the SDT; or an ID of a quality of service (QoS) flow supporting the SDT. The data size of the UL SDT data detected may be the number of data packets or a size of data packets.

In an embodiment, the method may further include: determining whether the UL data detected is SDT data, and if so, the DL data transmission started to the UE is SDT. Determining whether the UL data detected is the SDT data may be include: determining whether the UL data detected is the SDT data based on the auxiliary information in the indication message. For example, it is determined that the DL data transmission is SDT based on a PDU session and/or a QoS flow corresponding to the UL data detected, or it is determined that the DL data transmission is SDT based on transmission information of the UL data.

At this time, the preset condition is met may be the indication message sent by the second network device is received.

In an embodiment, DL data is a preset type of data. The preset type of data includes SDT data.

In an embodiment, S110 includes: determining that the DL data transmission is a SDT based on a PDU session and/or a QoS flow corresponding to the UL data detected; or determining that the DL data transmission is a SDT based on transmission information of the UL data.

In an embodiment, the PDU session and/or the QoS flow corresponding to the UL data may be determined according to the auxiliary information in the indication message, or may be determined by other means such as obtaining it from the second network device, such as a base station.

In an embodiment, the transmission information of the UL data may include a packet size and/or a transmission frequency of the UL data.

In an embodiment, if it is determined that the DL data transmission is the SDT according to the PDU session and/or the QoS flow corresponding to the UL data detected, or if it is determined that the DL data transmission is the SDT according to the transmission information of the UL data, DL SDT to the UE is started when a preset condition is met.

In an embodiment, the preset condition may be that the DL data transmission is determined to be the SDT based on a PDU session and/or a QoS flow corresponding to the UL data detected; or the downlink data transmission is determined to be the SDT based on transmission information of the UL data.

In an embodiment, the first network device may determine a DL data transmission on the same PDU session and/or QoS flow as a SDT transmission if the corresponding PDU session and/or QoS flow is determined as the SDT by the upstream detection, i.e., transmit DL SDT data on the same PDU session and/or QoS flow. In this way, the first network device obtains information about a target PDU session and/or QoS flow for the DL SDT transmission according to a UL-DL association relationship.

In an embodiment, the second network device may inform the first network device of the information about the target PDU session and/or QoS flow for the DL SDT transmission, so that the first network device starts the DL SDT data transmission to the UE on the target PDU session and/or QoS flow when a preset condition is met.

Therefore, even if the first network device is performing a core network-based mobile terminated communication and/or high latency communication function, the DL SDT data transmission to the UE may be downlinked in a timely manner upon detection of the UL SDT data, thereby reducing the problem of SDT transmission failures due to the network device's determination of the UE as being unreachable leading to blocking date transmission. In contrast, the DL non-SDT data transmission may be delayed until the first network device determines that the terminal as reachable.

In an embodiment, S110 includes:
if it is determined that the DL data transmission is SDT according to a PDU session and/or a QoS flow corresponding to the detected UL data, starting a DL SDT data transmission to the UE when a preset condition is met; or
if it is determined that the DL data transmission is SDT according to transmission information of the UL data, starting a DL SDT data transmission to the UE when a preset condition is met.

It is determined that the DL data transmission is SDT according to the transmission information of the UL data, such as a packet size and/or a transmission frequency.

In an embodiment, the first network device starts the DL SDT data transmission to the UE without starting a DL non-SDT data transmission to the UE.

Therefore, the DL data transmission to the UE may be started after the UL data is detected, thereby reducing the problem of SDT transmission failures due to the network device's determination of the UE as being unreachable leading to blocking date transmission, which improves a stability and a data transmission efficiency of data interaction between the UE and the network device, thereby reducing a failure rate of the DL data transmission.

It should be noted that the description of repeated or corresponding contents of other embodiments can refer to the relevant parts of the aforementioned embodiments, such as S110, which will not be repeated here.

It should be noted that the technical features described in the foregoing embodiments may be arbitrarily arranged, combined and exchanged without contradiction, and form new methods and technical solutions.

It should be noted that those skilled in the art understand that the methods provided by the embodiments of the disclosure may be executed alone or together with some methods in the embodiments of the disclosure or other embodiments, or some methods in related arts.

In some embodiments, as illustrated in FIG. 3, S110 includes:
S111: starting the DL data transmission to the UE when an indication message of a second network device is received, in which the indication message indicates that UL SDT data is detected, the first network device is an AMF or an SMF, and the second network device is a base station or a UPF.

In an embodiment, starting the DL data transmission to the UE in a case that the first network device is an AMF, includes: notifying a core network element other than the AMF to perform the DL data transmission to the UE. Performing the DL data transmission to the UE may be as follows: sending the DL data to a base station, sending it to the UE via the base station.

In an embodiment, in a case that the first network device is an AMF, the DL data transmission to the UE is started when the indication message from the base station is received. The base station may send the indication message to the AMF when it receives UL SDT data.

In an embodiment, in a case that the first network device is an AMF, the DL data transmission to the UE is started when an indication message form a UPF is received. The UPF may send the indication message to the AMF when UL SDT data sent by the base station is received or when an indication message from the base station is received. The base station may send the indication message to the UPF when it receives the UL SDT data.

In an embodiment, notifying a network element other than the AMF to perform the DL data transmission to the UE includes: when it is determined that the UE is reachable, notifying a network element other than the AMF to perform the DL data transmission to the UE.

In an embodiment, the first network device determines that the UE is in an unreachable state prior receiving the indication message, it may re-determine the UE is now in a reachable state after receiving the indication message.

In an embodiment, in a case that the first network device is an AMF, the method may further include: if it is still determined that the UE is unreachable after the indication message is received, notifying the base station to maintain in the inactive state. Maintaining in the inactive state may refer to that the base station and the UE both maintain in an RRC inactive state.

In an embodiment, DL data may be DL SDT data.

In an embodiment, the base station notifies the core network device that it can receive the indication message from the base station via a control plane, i.e., AMF, etc. In this case, the first network device is an AMF or an SMF, and the second network device is a base station. Or, the base station notifies the core network device via a user plane, that is, after a UPF receives the indication message from the base station, the UPF sends the indication message to other core network devices such as an AMF and/or an SMF. In this case, the first network device is an AMF and/or an SMF, and the second network device is a UPF.

In this way, after UL SDT data is detected, the base station indicates the first network device to start the DL data transmission to the UE, thereby reducing the problem of SDT transmission failures due to the network device's determination of the UE as being unreachable leading to blocking date transmission.

It should be noted that the description of repeated or corresponding contents in other embodiments can refer to the relevant parts of the aforementioned embodiments, such as S110, which will not be repeated here.

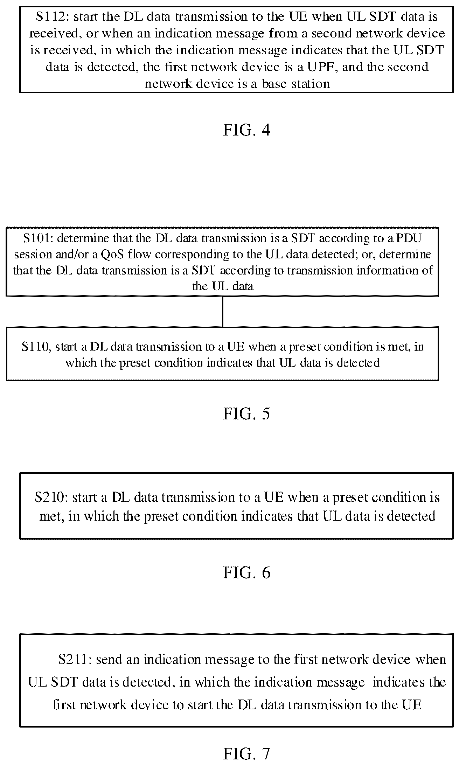

In some embodiments, as illustrated in FIG. 4, S110 includes: S112: starting the DL data transmission to the UE when UL SDT data is received, or when an indication message from a second network device is received, in which the indication message indicates that the UL SDT data is detected, the first network device is a UPF, and the second network device is a base station.

In an embodiment, the UL SDT data is received may be the UL SDT data sent by the base station is received. The indication message from the second network device is received may be the indication message sent by the base station is received. Starting the DL data transmission to the UE when the indication message of the second network device is received includes: sending the DL data to the second network device when the indication message of the second network device is received, or sending an indication message to other core network devices such as an AMF and/or an SMF to indicate the core network devices to start the DL data transmission to the UE.

In an embodiment, in a case that the first network device is a UPF, starting the DL data transmission to the UE includes: the UPF sending an indication message to an AMF, and the AMF indicating to start the DL data transmission to UE. The indication message sent to the AMF may be the same as the indication message sent by the base station and received by the UPF.

In an embodiment, when the first network device is a UPF, starting the DL data transmission to the UE includes: sending DL data to the second network device. In this case, the second network device is a base station.

In an embodiment, after receiving UL SDT data, the base station sends the UL SDT data to the UPF. After receiving the UL SDT data, the UPF sends DL data to the base station.

In an embodiment, after receiving UL SDT data, the base station sends the UL SDT data to the UPF. After receiving the UL SDT data, the UPF sends an indication message to an AMF. After receiving the indication message, the AMF informs other core network elements except the AMF to perform the DL data transmission to the UE, or the AMF sends DL data to the base station.

In an embodiment, after receiving UL SDT data, the base station sends an indication message to a UPF. After receiving the indication message, the UPF sends DL data to the base station.

In an embodiment, after receiving UL SDT data, the base station sends an indication message to a UPF. After receiving the indication message, the UPF sends an indication message to an AMF. After receiving the indication message, the AMF notifies other core network elements except the AMF to perform the DL data transmission to the UE, or the AMF sends DL data to the base station.

It should be noted that the description of repeated or corresponding contents in other embodiments can refer to the relevant parts of the aforementioned embodiments, such as S110, which will not be repeated here.

In some embodiments, the indication message includes a control plane signaling or a user plane signaling.

In a case that the first network device is an AMF, the indication message may be a control plane signaling, and the control plane signaling may be a signaling sent by the base station to the AMF. In a case that the first network device is a UPF, the indication message may be a user plane signaling, and the user plane signaling may be a signaling sent by the base station to the UPF.

In some embodiments, the indication message is a control plane signaling, which indicates that UL SDT data has arrived or a SDT is in progress.

In some embodiments, the indication message is a control plane signaling, which carries auxiliary information indicating that UL SDT data is detected.

In some embodiments, the auxiliary information includes at least one of the following: a data size of uplink SDT data detected; an ID of a PDU session supporting the SDT; or an ID of a QoS flow supporting the SDT.

In some embodiments, in a case that the first network device is the AMF, starting the DL data transmission to the UE, includes: notifying a core network element other than the AMF to start the downlink data transmission to the UE.

In some embodiments, starting the DL data transmission to the UE includes: sending DL data to the second network device.

In some embodiments, the DL data is SDT data.

In some embodiments, as illustrated in FIG. 5, the method further includes S101: determining that the DL data transmission is SDT according to a PDU session and/or a QoS flow corresponding to the detected UL data; or determining that the DL data transmission is SDT according to transmission information of the UL data.

In an embodiment, the PDU session and/or the QoS flow corresponding to the UL data may be determined according to the auxiliary information in the indication message, or may be determined by other means such as obtaining it from the second network device, such as a base station.

In an embodiment, the transmission information of the UL data may include a packet size and/or a transmission frequency of the UL data.

In an embodiment, the DL data transmission to the UE is started when the preset condition is met, and the DL data transmission may be DL SDT.

In some embodiments, the first network device is used to perform the core network based mobile terminated communication and/or high latency communication functions.

As an embodiment, the first network device may determine a DL data transmission on the same PDU session and/or QoS flow as a SDT transmission if the corresponding PDU session and/or QoS flow is determined as the SDT by the upstream detection, i.e., transmit DL SDT data on the same PDU session and/or QoS flow. In this way, the first network device obtains information about a target PDU session and/or QoS flow for the DL SDT transmission according to a UL-DL association relationship.

As an embodiment, the second network device may also inform the first network device of the information about the target PDU session and/or QoS flow for the DL SDT transmission, so that the first network device starts the DL SDT data transmission to the UE on the target PDU session and/or QoS flow when the preset condition is met.

It should be noted that the description of repeated or corresponding contents of other embodiments can refer to the relevant parts of the aforementioned embodiments, such as S110, which will not be repeated here.

It should be noted that the technical features described in the foregoing embodiments may be arbitrarily arranged, combined and exchanged without contradiction, and form new methods and technical solutions.

It should be noted that those skilled in the art understand that the methods provided by the embodiments of the disclosure may be executed alone or together with some methods in the embodiments of the disclosure or other embodiments, or some methods in related arts.

FIG. 6 illustrates a data transmission method. The method is performed by a second network device, and includes S210: starting a DL data transmission to a UE when a preset condition is met, in which the preset condition indicates that UL data is detected.

The second network device is a base station or a UPF, and the preset condition may be that the UL data of the UE is received. Or, in a case that the second network device is a UPF, the preset condition may also be that an indication message of the base station is received, in which the indication message indicates that the base station receives the UL data. For example, the UL data may be SDT data.

In an embodiment, in a case that the second network device is a base station, starting the DL data transmission to the UE when the preset condition is met may be sending an indication message to the first network device to indicate the first network device to start the DL data transmission to the UE when the preset condition is met. The first network device is a core network device, such as an AMF, an SMF or a UPF.

In an embodiment, in a case that the second network device is a UPF, starting the DL data transmission to the UE when the preset condition is met, may include: sending an indication message to the first network device when the preset condition is met, or directly sending DL data to the base station. The first network device may be a core network device other than the UPF, such as an AMF.

In an embodiment, the UE is in an RRC inactive state.

In an embodiment, the UE configures an inactive eDRX cycle value to be greater than a preset threshold, and the UE also configures SDT.

In an embodiment, after receiving UL SDT data, the base station sends an indication message to the first network device such as an AMF or an SMF, and the first network device sends DL data to the base station after receiving the indication message, or notifies other core network elements to perform the DL data transmission to the UE.

In an embodiment, after receiving UL SDT data, the base station sends the UL SDT data to a UPF, and the UPF sends DL data to the base station after receiving the UL SDT data.

In an embodiment, after receiving UL SDT data, the base station sends the UL SDT data to a UPF. After receiving the UL SDT data, the UPF sends an indication message to an AMF. After receiving the indication message, the AMF informs a core network element other than the AMF to perform the DL data transmission to UE, or the AMF sends DL data to the base station.

In an embodiment, after receiving UL SDT data, the base station sends an indication message to a UPF, and the UPF sends DL data to the base station after receiving the indication message.

In an embodiment, after receiving UL SDT data, the base station sends an indication message to a UPF, and the UPF sends the indication message to an AMF after receiving the indication message. After receiving the indication message, the AMF notifies a core network element other than the AMF to perform the DL data transmission to the UE, or the AMF sends DL data to the base station.

In an embodiment, the preset condition is that UL SDT data is detected, starting the DL data transmission to the UE includes: sending an indication message to the first network device.

In some embodiments, as illustrated in FIG. 7, S210 includes:
S211: sending an indication message to the first network device when UL SDT data is detected, in which the indication message indicates the first network device to start the DL data transmission to the UE.

The first network device is an AMF or an SMF, and the second network device is a base station or a UPF. Or, the first network device is a UPF, and the second network device is a base station.

In an embodiment, the indication message includes: a control plane signaling or a user plane signaling.

In an embodiment, the indication message is a control plane signaling, and the control plane signaling indicates that the UL SDT data has arrived or SDT is in progress.

In an embodiment, the indication message is a control plane signaling, and the control plane signaling carries auxiliary information indicating that the UL SDT data is detected.

In an embodiment, the auxiliary information includes at least one of the following:
a data size of the detected uplink SDT data;
an ID of a PDU session supporting the SDT; or
an ID of a QoS flow supporting the SDT.

In an embodiment, DL data is SDT data.

In an embodiment, the method further includes:
determining that the DL data transmission is a SDT according to a PDU session and/or a QoS flow corresponding to the detected UL data; or determining that the DL data transmission is a SDT according to transmission information of the UL data. In this case, the second network device may be a UPF.

In an embodiment, the preset condition may be that the DL data transmission is determined to be SDT according to a PDU session and/or a QoS flow corresponding to the detected UL data; or the DL data transmission is determined to be SDT, according to transmission information of the UL data.

In an embodiment, step S210 may include: notifying the first network device to start the DL SDT transmission to the UE.

Determining that the DL data transmission is a SDT according to the transmission information of the UL data may include: determining the DL data transmission as a SDT according to the transmission information of the UL data, such as a packet size and/or a transmission frequency.

As an embodiment, the second network device may inform the first network device of the information about a target PDU session and/or QoS flow for the DL SDT, so that the first network device starts the DL SDT data transmission to the UE on the target PDU session and/or QoS flow when the preset condition is met.

It should be noted that the description of repeated or corresponding contents in other embodiments can refer to the relevant parts of the above-mentioned technical solutions performed by the UE, such as S110, which will not be repeated here.

It should be noted that the technical features described in the foregoing embodiments may be arbitrarily arranged, combined and exchanged without contradiction, and form new methods and technical solutions.

It should be noted that those skilled in the art understand that the methods provided by the embodiments of the disclosure may be executed alone or together with other methods in the embodiments of the disclosure or other embodiments, or some methods in related arts.

In embodiments, a data transmission method is performed by a data transmission system, which includes a first network device and a second network device. The data transmission method includes: the second network device sends an indication message to the first network device upon detecting UL SDT data; and the first network device starts a DL data transmission to a UE upon receiving the indication message; in which the first network device is an AMF and/or an SMF, and the second network device is a base station and/or a UPF; or the first network device is a UPF, and the second network device is a base station.

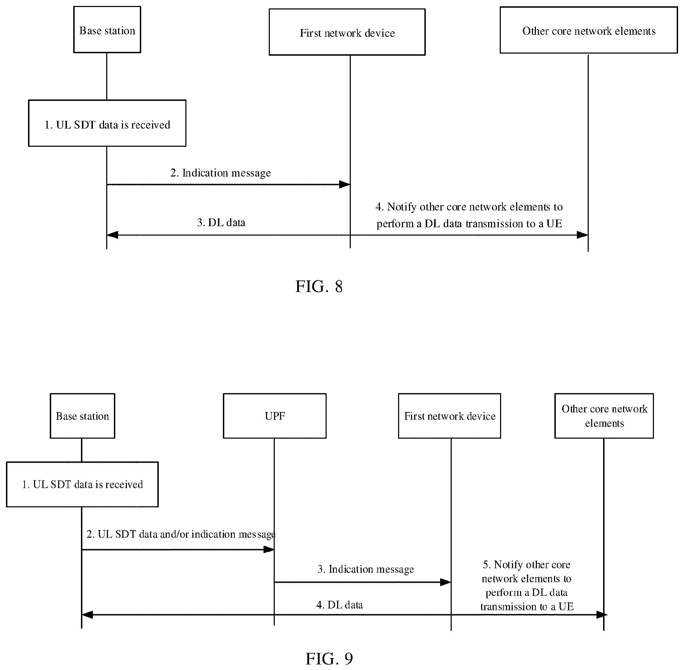

In an embodiment, as illustrated in FIG. 8, after receiving UL SDT data, the base station sends an indication message to the first network device, such as an AMF or an SMF, and the first network device sends DL data to the base station after receiving the indication message, and/or the first network device notifies other core network elements to perform a DL data transmission to the UE.

In an embodiment, and as illustrated in FIG. 9, after receiving UL SDT data, the base station sends the UL SDT data and/or an indication message to a UPF, and the UPF sends the indication message to the first network device, such as an AMF and/or an SMF, after receiving the UL SDT data and/or the indication message. After receiving the indication message, the first network device notifies a core network element other than the first network device to perform a DL data transmission to the UE, and/or the first network device sends DL data to the base station.

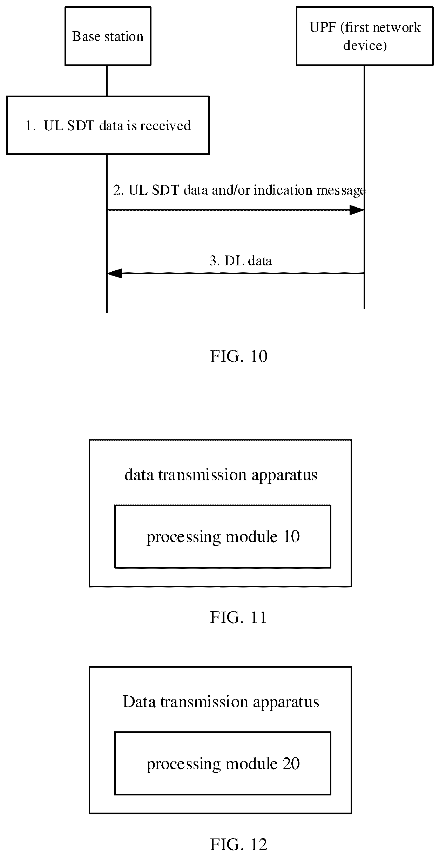

In an embodiment, and as illustrated in FIG. 10, after receiving UL SDT data, the base station sends the UL SDT data and/or an indication message to the UPF. The UPF sends DL data to the base station after receiving the UL SDT data and/or the indication message.

An embodiment of a data transmission system includes: a first network device and a second network device. The first network device is configured to perform one or more of the above technical solutions on the first network device side. The second network device is configured to perform one or more of the above technical solutions on the second network device side.

As illustrated in FIG. 11, an embodiment of the disclosure provides a data transmission apparatus. The apparatus is applied to a first network device, and includes: a first processor 10, configured to start a DL data transmission to a UE when a preset condition is met, in which the preset condition indicates that UL data is detected.

In an embodiment, the preset condition is that an indication message from a second network device is received, and the indication message is configured to indicate that UL SDT data is detected; and the first network device is an AMF or an SMF, and the second network device is a base station or a UPF.

In an embodiment, the preset condition is that UL SDT data is received, or that an indication message from a second network device is received, and the indication message indicates that the UL SDT data is detected; and the first network device is a UPF, and the second network device is a base station.

In an embodiment, the indication message is a control plane signaling, and the control plane signaling indicates that the UL SDT data has arrived or SDT is in progress, or the control plane signaling carries auxiliary information indicating that the UL SDT data is detected.

In an embodiment, the auxiliary information includes at least one of the following: a data size of the detected uplink SDT data; an ID of a PDU session supporting the SDT; or an ID of a QoS flow supporting the SDT.

In an embodiment, in a case that the first network device is the AMF, the first processing module 10 is configured to: notify a network elements other than the AMF to start DL data transmission to the UE.

In an embodiment, the first processing module 10 is configured to: send DL data to the second network device.

In an embodiment, DL data refers to a preset type of data. The preset type of data includes SDT data.

In an embodiment, the first processing module 10 is configured to: determine that the DL data transmission is a SDT according to a PDU session and/or a QoS flow corresponding to the detected UL data; or determine that the DL data transmission is a SDT according to transmission information of the UL data.

As illustrated in FIG. 12, an embodiment of the disclosure provides a data transmission apparatus. The apparatus is applied to a second network device, and includes: a second processing module 20, configured to start a DL data transmission to a UE when a preset condition is met, in which the preset condition indicates that UL data is detected.

In an embodiment, the preset condition is that UL SDT data is detected. The second processing module 20 is configured to send an indication message to a first network device, in which the indication message indicates the first network device to start DL data transmission to the UE. The first network device is an AMF or an SMF, and the second network device is a base station or a UPF; or the first network device is a UPF, and the second network device is a base station.

In an embodiment, the indication message is a control plane signaling, and the control plane signaling indicates that the UL SDT data has arrived or SDT is in progress, or the control plane signaling carries auxiliary information indicating that the UL SDT data is detected.

In an embodiment, the auxiliary information includes at least one of the following: a data size of the detected uplink SDT data; an ID of a PDU session supporting the SDT; or an ID of a QoS flow supporting the SDT.

In an embodiment, the DL data is SDT data.

In an embodiment, the second processing module 20 is configured to determine that the DL data transmission is a SDT according to a PDU session and/or a QoS flow corresponding to the detected UL data; or determine that the DL data transmission is a SDT according to transmission information of the UL data.

Each step in an implementation or embodiment may be implemented as an independent embodiment, and steps included in the implementation or embodiment may be combined arbitrarily. For example, a solution after removing some steps in the implementation or embodiment may be implemented as an independent embodiment, and the order of steps included in the implementation or embodiment is variable. Moreover, optional methods or optional examples in the implementation or embodiment may be combined arbitrarily. In addition, other implementations or embodiments may be combined arbitrarily. For example, some or all the steps of the other implementations or embodiments may be combined arbitrarily, and the other implementations or embodiments may be arbitrarily combined with the optional methods or optional examples in the implementation or embodiment.

An embodiment of the disclosure provides a communication device. The communication device includes: a memory for storing processor-executable instructions; and a processor connected to the memory; in which the processor is configured to implement the data transmission methods provided by any of the aforementioned technical solutions.

The processor includes various types of storage mediums, such as non-transitory computer storage mediums, which can continue to remember information stored on the communication device after power failure.

The communication device includes a terminal or a network element, and the network element may be any one of the first network element to the fourth network element.

The processor is connected to the memory through a bus or the like for reading executable programs stored on the memory to implement at least one of the methods shown in FIGS. 2-10.

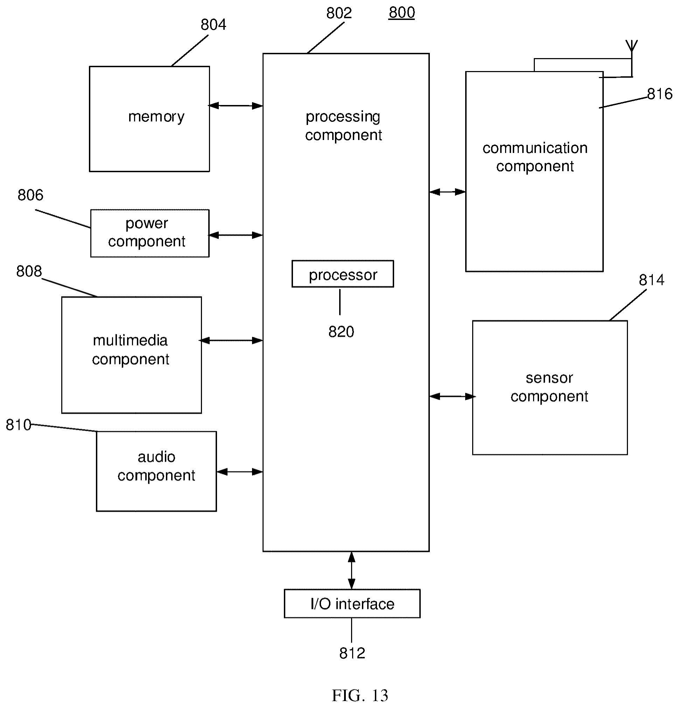

FIG. 13 is a block diagram of a terminal 800 illustrated according to an embodiment. For example, the terminal 800 may be a mobile phone, a computer, a digital broadcasting UE, a message transceiver device, a game console, a tablet device, a medical device, a fitness device or a personal digital assistant.

As illustrated in FIG. 13, the terminal 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the terminal 800, such as the operations associated with display, telephone calls, data communications, camera operations, and recording operations. The processing component 802 may include one or more processors 820 to perform all or part of the steps in the above described methods. Moreover, the processing component 802 may include one or more modules which facilitate the interaction between the processing component 802 and other components. For example, the processing component 802 may include a multimedia module to facilitate the interaction between the multimedia component 808 and the processing component 802.

The memory 804 is configured to store various types of data to support the operation of the terminal 800. Examples of such data include instructions for any applications or methods operated on the terminal 800, contact data, phonebook data, messages, pictures, video, etc. The memory 804 may be implemented using any type of volatile or non-volatile memory devices, or a combination thereof, such as a static random-access memory (SRAM), an electrically-erasable programmable read only memory (EEPROM), an erasable programmable read only memory (EPROM), a programmable read only memory (PROM), a read only memory (ROM), a magnetic memory, a flash memory, a magnetic or optical disk.

The power component 806 provides power to various components of the terminal 800. The power component 806 may include a power management system, one or more power sources, and any other components associated with the generation, management, and distribution of power in the terminal 800.

The multimedia component 808 includes a screen providing an output interface between the terminal 800 and the user. In some embodiments, the screen may include a liquid crystal display (LCD) and a touch panel (TP). If the screen includes the TP, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a period of wakeup time and a pressure associated with the touch or swipe action. In some embodiments, the multimedia component 808 includes a front-facing camera and/or a rear-facing camera. When the terminal 800 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 810 is configured to output and/or input audio signals. For example, the audio component 810 includes a microphone (MIC) configured to receive an external audio signal when the terminal 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the terminal 800. For instance, the sensor component 814 may detect an open/closed status of the terminal 800, relative positioning of components, e.g., the display and the keypad, of the terminal 800, a change in position of the terminal 800 or a component of the terminal 800, a presence or absence of user contact with the terminal 800, an orientation or an acceleration/deceleration of the terminal 800, and a change in temperature of the terminal 800. The sensor component 814 may include a proximity sensor configured to detect the presence of nearby objects without any physical contact. The sensor component 814 may also include a light sensor, such as a complementary metal oxide semiconductor (CMOS) or charge-coupled device (CCD) image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the terminal 800 and other devices. The terminal 800 can access a wireless network based on a communication standard, such as wireless fidelity (Wi-Fi), 2G or 3G, or a combination thereof. In an embodiment, the communication component 816 receives a broadcast signal or broadcast associated information from an external broadcast management system via a broadcast channel. In an embodiment, the communication component 816 further includes a near field communication (NFC) module to facilitate short-range communication. For example, the NFC module may be implemented based on a radio frequency identification (RFID) technology, an infrared data association (IrDA) technology, an ultra-wide band (UWB) technology, a blue tooth (BT) technology, and other technologies.

In an embodiment, the terminal 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors or other electronic components, for performing the above described methods.

In an embodiment, there is also provided a non-transitory computer readable storage medium including instructions, such as the memory 804, executable by the processor 820 in the terminal 800, for performing the above methods. For example, the non-transitory computer-readable storage medium may be a ROM, a random access memory (RAM), a CD-ROM, a magnetic tape, a floppy disc, and an optical data storage device.

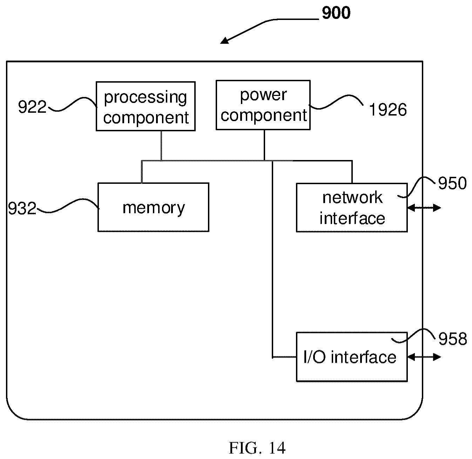

As illustrated in FIG. 14, an embodiment of the disclosure illustrates an architecture of a communication device 900. For example, the communication device 900 may be a network node device or the above base station.

As illustrated in FIG. 14, the communication device 900 includes a processing component 922 consisting of one or more processors, and memory resources represented by a memory 932 for storing instructions executable by the processing component 922, such as applications. The application programs stored in the memory 932 may include one or more modules each corresponding to a set of instructions. In addition, the processing component 922 is configured to execute the instructions to perform any of the methods described above that are applicable to the base station, for example, any of the methods illustrated in FIGs. 2-10.

The communication device 900 may also include a power component 1926 configured to perform power management of the communication device 900, a wired or wireless network interface 950 configured to connect the communication device 900 to a network, and an I/O interface 958. The communication device 900 may operate based on an operating system stored in the memory 932, such as Windows Server TM, Mac OS XTM, UnixTM, LinuxTM, FreeBSDTM, or the like.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as illustrative only, with a true scope and spirit of the disclosure being indicated by the attached claims.

It will be appreciated that the disclosure is not limited to the exact construction that has been described above and illustrated in the accompanying drawings, and that various modifications and changes may be made without departing from the scope thereof. It is intended that the scope of the disclosure only be limited by the attached claims.

## Claims

1. A data transmission method, performed by a first network device, comprising:
starting a downlink data transmission to a user equipment (UE) when a preset condition is met, wherein the preset condition indicates that uplink data is detected.

2. The method of claim 1, wherein the preset condition is that an indication message from a second network device is received, and the indication message indicates that uplink small data transmission (SDT) data is detected; and
the first network device is an access and mobility management function (AMF) or a session management function (SMF), and the second network device is a base station or a user plane function (UPF).

3. The method of claim 1, wherein the preset condition is that uplink SDT data is received, or that an indication message from a second network device is received, and the indication message indicates that the uplink SDT data is detected; and
the first network device is a UPF, and the second network device is a base station.

4. The method of claim 2 or 3, wherein the indication message is a control plane signaling, and the control plane signaling indicates that the uplink SDT data has arrived or a SDT is in progress, or the control plane signaling carries auxiliary information indicating that the uplink SDT data is detected.

5. The method of claim 4, wherein the auxiliary information comprises at least one of:
a data size of the uplink SDT data detected;
an identity (ID) of a protocol data unit (PDU) session supporting the SDT; or
an ID of a quality of service (QoS) flow supporting the SDT.

6. The method of claim 2, wherein when the first network device is the AMF, starting the downlink data transmission to the UE comprises:
notifying a core network element other than the AMF to start the downlink data transmission to the UE.

7. The method of claim 3, further comprising:
sending downlink data to the second network device.

8. The method of any one of claims 1-7, wherein the downlink data is SDT data.

9. The method of any one of claims 1-8, further comprising:
determining that the downlink data transmission is a SDT based on a PDU session and/or a QoS flow corresponding to the uplink data detected; or
determining that the downlink data transmission is a SDT based on transmission information of the uplink data.

10. A data transmission method, performed by a second network device, comprising:
starting a downlink data transmission to a UE when a preset condition is met, wherein the preset condition indicates that uplink data is detected.

11. The method of claim 10, wherein the preset condition is that uplink small data transmission (SDT) data is detected;
starting the downlink data transmission to the UE comprises: sending an indication message to a first network device, wherein the indication message indicates the first network device to start the downlink data transmission to the UE; and
the first network device is an AMF or an SMF, and the second network device is a base station or a UPF; or the first network device is a UPF, and the second network device is a base station.

12. The method of claim 11, wherein the indication message is a control plane signaling, and the control plane signaling indicates that uplink SDT data has arrived or a SDT is in progress, or the control plane signaling carries auxiliary information indicating that the uplink SDT data is detected.

13. The method of claim 12, wherein the auxiliary information comprises at least one of:
a data size of the uplink SDT data detected;
an ID of a PDU session supporting the SDT; or
an ID of a QoS flow supporting the SDT.

14. The method of any one of claims 10-13, wherein downlink data is SDT data.

15. The method of any one of claims 10-14, further comprising:
determining that the downlink data transmission is a SDT based on a PDU session and/or a QoS flow corresponding to the detected uplink data; or determining that the downlink data transmission is a SDT based on transmission information of the uplink data.

16. A data transmission system, comprising: a first network device and a second network device;
wherein the first network device is configured to implement the method according to any one of claims 1-9; and
the second network device is configured to implement the method according to any one of claims 10-15.

17. A data transmission apparatus, comprising:
a first processing module, configured to start a downlink data transmission to a UE when a preset condition is met, wherein the preset condition indicates that uplink data is detected.

18. A data transmission apparatus, comprising:
a second processing module, configured to start a downlink data transmission to a UE when a preset condition is met, wherein the preset condition indicates that uplink data is detected.

19. A communication device, comprising a processor, a memory, and an executable program stored in the memory and executable by the processor, wherein the processor, when executing the executable program, implements the method according to any one of claims 1-9 or the method according to any one of claims 10-15.

20. A computer storage medium, wherein the computer storage medium stores an executable program that, when executed by a processor, causes the processor to implement the method according to any one of claims 1-9 or the method according to any one of claims 10-15.
